(19) Europäisches Patentamt

European Patent Office

Office européen des brevets

(11) Veröffentlichungsnummer: **0 247 283**
**A2**

(12) **EUROPÄISCHE PATENTANMELDUNG**

(21) Anmeldenummer: **87101998.0**

(22) Anmeldetag: **12.02.87**

(51) Int. Cl.⁴: **B60P 7/13** , B62D 27/06

(30) Priorität: **28.05.86 DE 3618013**

(43) Veröffentlichungstag der Anmeldung:
**02.12.87 Patentblatt 87/49**

(84) Benannte Vertragsstaaten:
**BE DE ES FR GB IT LU NL**

(71) Anmelder: **Gerd Schulz Fahrzeug- und
Container-Technik
Besselstrasse 9
D-2100 Hamburg 90(DE)**

(72) Erfinder: **Schulz, Gerd
Besselstrasse 9
D-2100 Hamburg 90(DE)**
Erfinder: **Hartleif, Hans-Peter
Rotbergskamp 20 c
D-2100 Hamburg(DE)**

(74) Vertreter: **Eisenführ & Speiser
Martinistrasse 24
D-2800 Bremen 1(DE)**

(54) **Beschlag für das Niederspannen lösbarer Aufbauten, insbesondere für Fahrzeuge.**

㉟ Die Erfindung betrifft einen Niederspannbeschlag für lösbare Aufbauten, insbesondere für Fahrzeuge. Dieser weist ein Gehäuse mit einer Aufstandsfläche für den Aufbau, einem von der Aufstandsfläche aufwärts vorstehenden
Führungselement und einer mittigen vertikalen
Durchbohrung auf. Ein Spann-und Riegelbolzen mit
einem Hammerkopf und einem Gewinde am unteren
Schaftabschnitt ist in der Durchbohrung verdrehbar
und vertikal verschieblich. Auf das Gewinde des
Spann-und Riegelbolzens ist eine Spannmutter aufschraubbar. Das Führungselement wird von vier auf
der Aufstandsfläche nach oben ragenden Nocken
gebildet, die so angeordnet sind, daß sie zwischen
sich zwei Paare jeweils fluchtender Zwischenräume
bilden, die den Hammerkopf des Spann-und Riegelbolzens wenigstens teilweise aufnehmen können.
Alle Nocken weisen eine rechteckige Grundfläche
auf und sind an ihrer Oberseite mit auswärts abfallenden Schrägflächen versehen. Der Spann-und Riegelbolzen ist T-förmig aus zwei im wesentlichen
gleich dicken Stabsegmenten ausgebildet.

Fig. 1

## Niederspannbeschlag für lösbare Aufbauten, insbesondere für Fahrzeuge

Die Erfindung betrifft einen Niederspannbeschlag für lösbare Aufbauten, insbesondere für Fahrzeuge, mit einem Gehäuse mit einer Aufstandsfläche für den Aufbau, einem von der Aufstandsfläche aufwärts vorstehenden Führungselement und einer mittigen vertikalen Durchbohrung, einem in der Durchbohrung verdrehbaren und vertikal verschieblichen Spann-und Riegelbolzen, der einem Hammerkopf aufweist und an seinem unteren Schaftabschnitt ein Gewinde trägt, und einer auf das Gewinde des Spann-und Riegelbolzens aufschraubbaren Spannmutter.

Solche Beschläge sind als Eckbeschläge zum Niederspannen von Containern beispielsweise aus der DE-OS 30 13 371 bekannt. Sie werden als Spezialteile an die Chassisausleger von Containerfahrzeugen montiert. Bei diesen Beschlägen handelt es sich um schwere, auf die speziellen Form- und Beanspruchungsbedingungen der Containerbefestigung abgestimmte Bauelemente, die für die Befestigung andere lösbarer Aufbauten zu aufwendig und zuden meist auch baulich nicht geeignet sind.

Andererseits besteht ein erhebliches Bedürfnis, die Herstellung von Fahrzeug und Aufbau auch für solche Lastfahrzeuge zu vereinfachen, die keine Containertransporter sind. Beispielsweise wäre es für · die Herstellung von Kühl-Tank-oder Möbelfahrzeugen vorteilhaft, anstelle des an einer Vielzahl von Positionen in herkömmlicher Weise mit dem Fahrzeugrahmen verschraubten Aufbaues eine leicht lösbare Befestigung des Aufbaues am Fahrzeugrahmen vorzusehen. Dann könnten Aufbau und Fahrzeug separat gefertigt und lackiert werden. Die Zugänglichkeit bei Wartungsarbeiten wäre ebenfalls wesentlich erleichtert. Während die Montage der Aufbauten in bekannter Weise erhebliche Vorarbeiten wie Vornahme von Bohrungen, Einschweißen von Gewindeteilen usw. erfordert und schätzungsweise einen Mann-Tag verbraucht, könnte der Arbeitsaufwand für die Verbindung von Aufbau und Fahrzeug unter Verwendung der erfindungsgemäßen Niederspannbeschläge auf etwa 30 Minuten reduziert werden. Die Kosten für Herstellung und Anbringung der Beschläge sind gegenüber der erzielbaren Ersparnis unbedeutend.

Angesichts dieser Situation setzt die Erfindung bei der Erkenntnis an, daß sich die Verwendung von Niederspannbeschlägen außer für Containerfahrzeuge auch für alle anderen mit Aufbauten versehenen Fahrzeuge eignet.

Vor diesem Hintergrund ist es Aufgabe der Erfindung, einen einfach herzustellenden, unaufwendigen Niederspannbeschlag der eingangs genannten Art zu schaffen, der sich klein und niedrig bauend ausführen läßt und daher für die sehr unterschiedlichen Platzverhältnisse bei der Anbringung unterschiedlicher Aufbauten eignet und trotzdem ein sichere Bedienung gewährleistet.

Zur Lösung dieser Aufgabe ist der Niederspannbeschlag der eingangs genannten Art erfindungsgemäß dadurch gekennzeichnet, daß das Führungselement aus vier von der Aufstandsfläche nach oben ragenden Nocken gebildet wird, die Nocken so angeordnet sind, daß sie zwischen sich zwei Paare jeweils fluchtender Zwischenräume bilden, die den Hammerkopf des Spann-und Riegelbolzens wenigstens teilweise aufnehmen können, alle Nocken an ihrer Oberseite mit auswärts abfallenden Schrägflächen versehen sind, und der Spann-und Riegelbolzen T-förmig aus zwei im wesentlichen gleichen dicken Stabsegmenten ausgebildet ist.

Vorteilhafte Ausgestaltungen der Erfindung sind in der Unteransprüchen definiert.

Ein wesentlicher Vorteil der Erfindung liegt in der Anordnung der vier Nocken in der beschriebenen Konfiguration auf der Aufstandsfläche. Diese vier Nocken bilden zusammen ein Führungselement. Die am Fahrzeug.chassis angeordneten Führungselemente führen den Aufbau beim Aufsetzen auf das Fahrzeugchassis in seine vorbestimmte Stellung. Durch die Anordnung der Nocken mit vorzugsweise über Kreuz angeordneten Zwischenraumpaaren sind zwei Stellungen des Spann-und Riegelbolzens vorgegeben, in denen dieser jeweils verdrehsicher gehalten ist.

Der Spann-und Riegelbolzen kann in einfachster Weise aus zwei T-förmig miteinander verbundenen Rundmaterialstücken gebildet werden, was wesentlich kosten günstiger ist als die für Container-Spannvorrichtungen notwendigen, speziell geformten Hammerkopfbolzen.

Der vorzugsweise insgesamt quaderförmige Niederspannbeschlag kann unter praktisch allen denkbaren Platzbedingungen angebracht werden und ist daher keineswegs auf eine Befestigung des Aufbaus an den Ecken des Fahrzeugchassis beschränkt.

Wenn in einer bevorzugten Ausführungsform der Spannund Riegelbolzen im unteren Schaftabschnitt eine Querbohrung und einem darin aufgenommenen Sicherungs-und Anzeigestift aufweist, ist nicht nur die Spannmutter gesichert, sondern zudem eine einfache Stellungsanzeige für den Hammerkopf des Spann-und Riegelbolzens gegeben. Dieser Hammerkopf ist bei aufgesetztem Aufbau nicht sichtbar.

Bevorzugt wird also Spannmutter eine Mutter mit zwei axialen Abschnitten verwendet, deren einer die Form einer normalen Sechskantmutter hat, während der andere, axial auf ihn folgende Abschnitt also manuell betätigbarer Spannmutterabschnitt ausgebildet ist. Diese Spannmutter ist nicht wärmeempfindlich und gestattet eine formschlüssige Sicherung mittels einer zwischen die Griffelemente des Spannmutterabschnittes eingreifenden Falle.

Wenn in der bevorzugten Ausführungsform in eine unterseitige Öffnung des Gehäuses eine Stützplatte eingesetzt wird, die zwischen sich und der Innenwand des Gehäuses Gummiformkörper im Klemmsitz lagert, ist ein federnder Verwindungsausgleich geschaffen, der Beschädigungen vermeiden hilft und die Lebensdauer von Aufbauten und Niederspannbeschlägen verlängert.

Die erfindungsgemäßen Niederspannbeschläge eignen sich nicht nur für die Befestigung von lösbaren Aufbauten auf Fahrzeugchassis. Sie können ebenso Verwendung finden bei der Sicherung von übereinander stapelbaren Behältern wie beispielsweise Baustellen-Wohnzellen.

Im folgenden wird eine bevorzugte Ausführungsform der Erfindung anhand der beigefügten Zeichnungen weiter erläutert. Es zeigen:

Fig. 1 eine längsseitige Ansicht eines Niederspannbeschlages;

Fig. 2 den Niederspannbeschlag gemäß Fig. 1 von der kurzen Seite;

Fig. 3 eine Aufsicht des Niederspannbeschlages gemäß Fig. 1 und 2;

Fig. 3a einen Teilschnitt gemäß der Linie A-B in Fig. 3;

Fig. 3b einen Teilschnitt gemäß der Linie C-C in Fig. 3;

Fig. 3c eine Aufsicht gemäß Fig. 3 bei entferntem Spann-und Riegelbolzen;

Fig. 4 einen Spann-und Riegelbolzen; und

Fig. 5 eine Spannmutter.

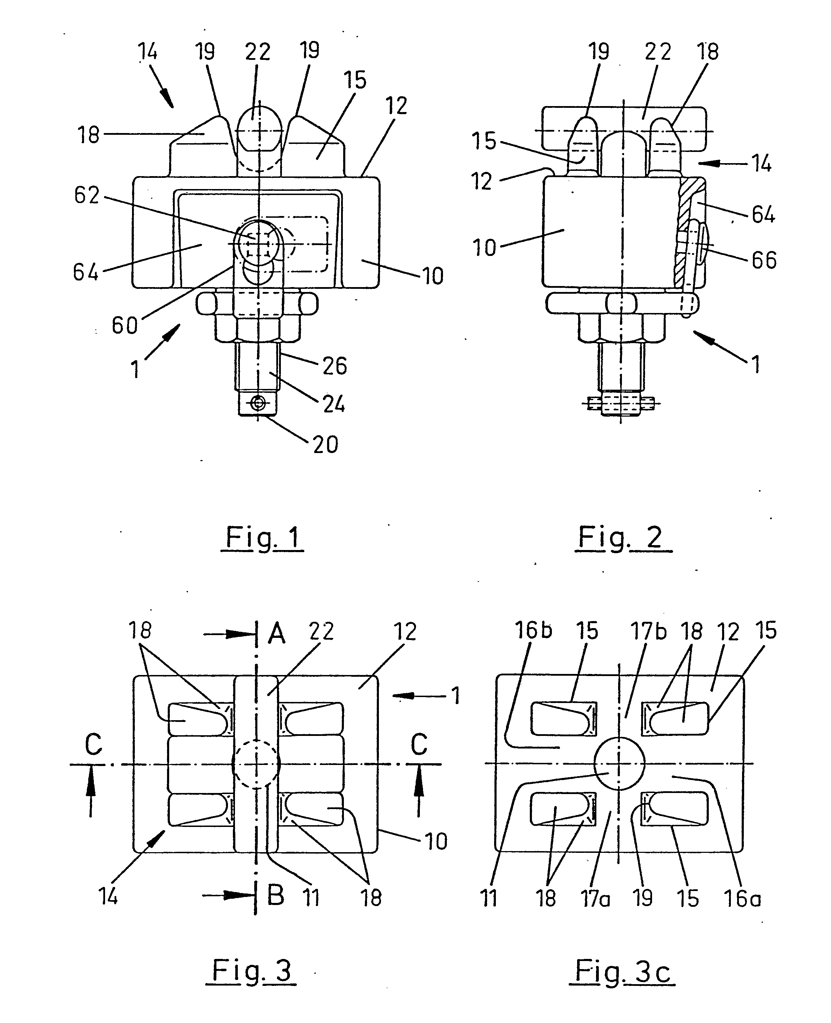

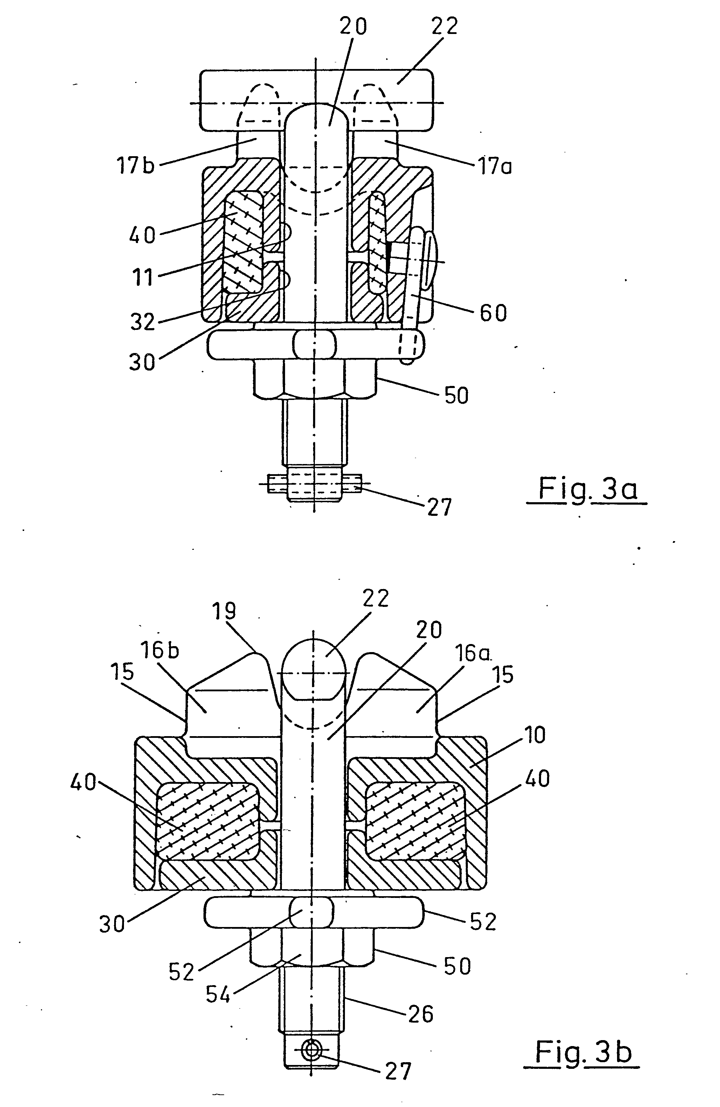

Der in Figur 1 gezeigte Niederspannbeschlag 1 umfaßt ein Gehäuse 10 in Form eines rechteckigen, unterseitig offenen Kastens. Das Gehäuse 10 bildet an seiner Oberseite eine Aufstandsfläche 12, auf welcher das (nicht gezeigte) Stützblech des niederzuspannenden Aufbaus in Auflage kommt. Die die Aufstandsfläche 12 bildende Oberseite des Gehäuses 10 weist eine mittige, vertikale Durchbohrung 11 auf, die besonders in Figuren 3a bis c erkennbar ist.

Von der Aufstandsfläche 12 stehen vier Nocken 15 aufwärts vor, die zusammen ein Führungselement 14 bilden. Die Nocken 15 haben, wie insbesondere Figuren 3 und 3c zeigen, eine rechteckige Grundfläche, von welcher sie sich mit zunächst im wesentlichen senkrechten Seitenwänden erheben. Wie insbesondere Figuren 1 und 2 zweigen, sind die Nocken 15 im oberen Bereich mit sich in Quer-und Längsrichtung erstreckenden Schrägflächen 18 versehen. Diese Schrägflächen 18 dienen zur Führung des Stützbleches des Aufbaus beim Aufsetzen auf die Aufständsfläche 12 und fallen deswegen auswärts in Richtung auf den Umfang des Niederspannbeschlages 1 ab. Nach oben laufen die Schrägflächen 18 in abgerundete Spitzen 19 der Nocken 15 aus.

Die vier Nocken 15 sind auf der Oberseite des Gehäuses 10 symmetrisch so angeordnet, daß sie zwischen sich ein erstes Paar in ihrer Längsrichtung fluchtender Zwischenräume 16a und 16b und ein dieses kreuzendes zweites Paar miteinander fluchtender Zwischenräume 17a und 17b bilden (Fig. 3c). Das erste Zwischenraumpaar 16a, 16b liegt zwischen den einander zugewandten langen Kanten der Nocken 15; das zweite Zwischenraumpaar 17a, 17b liegt zwischen den einander gegenüberliegenden kurzen Kanten der Nocken 15.

Der Querstab des T-förmigen Spann-und Riegelbolzens 20 bildet einen Hammerkopf 22. Dieser liegt in einer ersten Ruhestellung so im ersten Zwischenraumpaar 16a, 16b, daß er seitlich nicht über die Außenkonturen des Führungselementes 14 vorsteht. In einer zweiten Verriegelungsstellung steht der Hammerkopf 22 seitlich über die Außenkontur des Führungselementes 14 vor und ist im anderen Zwischenraumpaar 17a, 17b aufgenommen.

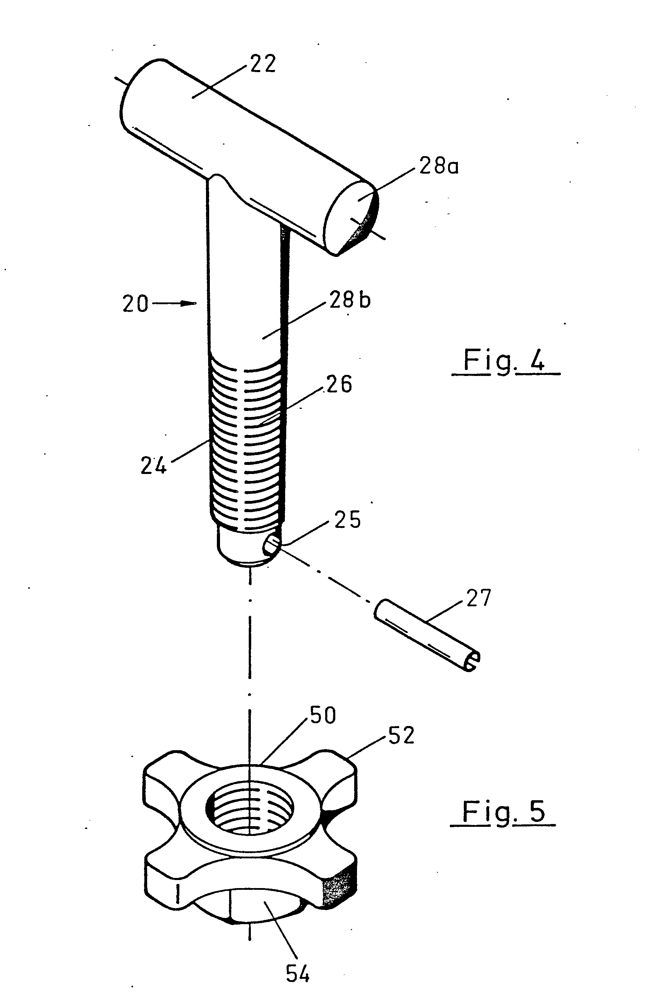

In dieser zweiten Verriegelungsstellung übergreift der Hammerkopf 22 mit seinen Endbereichen das auf der Aufstandsfläche 12 liegende Stützblech des Aufbaus und spannt es nieder. Dazu ist der untere Schaftabschnitt 24 des Spann-und Riegelbolzens 20 mit einem Gewinde 26 versehen, auf das eine Spannmutter 50 (Figuren 3a, 3b und 5) aufgeschraubt ist. Durch Anziehen der Spannmutter 50 wird der Hammerkopf 22 des Spannund Riegelbolzens 20 in Richtung auf die Aufstandsfläche 12 bewegt und dabei durch seine seitliche Führung an den Nocken 15 verdrehgesichert.

Soll der Aufbau entfernt werden, wird die Spannmutter 50 gelöst und der Spann-und Riegelbolzen 20 nach oben geschoben, bis er sich oberhalb der Spitzen 19 der Nocken 15 befindet und drehen läßt. Die Abrundung der Spitzen 19 erleichtert diese Umstellung des Hammerkopfes 22 von einem Zwischenraumpaar in das andere.

Der Hammerkopf 22 des Spann-und Riegelbolzens 20 ist höchstens so lang wie die längere horizontale Außenkante des Führungselementes 14, aber länger als die kürzere horizontale Kante des Führungselementes 14, da er sonst das Stützblech nicht übergreifen könnte. Andererseits ist der Hammerkopf nicht länger als die kleinste Breite der Aufstandsfläche 12 und vorzugsweise gerade so lang wie diese kleinste Breite der Austandsfläche 12. Dies zeigt Figur 3 besonders deutlich.

Der Spann-und Riegelbolzen 20 ist, wie insbesondere Figur 5 zeigt, aus zwei Stabsegmenten 28a, 28b gebildet, die T-förmig miteinander verbunden sind. Die Stabsegemente sind vorzugsweise einfache Rundmaterialstücke. Das den Hammerkopf 22 bildende Rundmaterialstück 28a ist unterseitig abgeflacht, um eine größere Auflagefläche am niedergespannten Stützblech zu bilden.

Das andere Rumdmaterialstück 28b trägt in seinem unteren Schaftabschnitt 24 ein Gewinde 26, auf welches die Spannmutter 50 aufgeschraubt wird. Unterhalb des Gewindes 26 ist eine Querbohrung 25 vorgesehen, die einen Sicherungs-und Anzeigestift 27 aufnimmt. Dieser sichert einerseits die Spannmutter gegenüber unerwünschtem Abfallen, und zeigt andererseits die jeweilige Stellung des bei angebrachtem Aufbau nicht mehr sichtbaren Hammerkopfes 22 an.

Während es ohne weiteres möglich ist, die Verriegelung ohne das beschriebene, unterseitig offene Gehäuse 10 nur mit einer Aufstandsplatte auszubilden, dient die Ausbildung des Gehäuses 10 mit einem unterseitig offenen Innenraum dazu, die Verwindungssteifheit des Niederspannbeschlages gegenüber dieser einfachsten Ausführungsform zu erhöhen. Zu diesem Zweck ist eine Stützplatte 30 vorgesehen, die insbesondere in Figuren 3a und 3b erkennbar ist und im Innenraum des Gehäuses 10 aufgenommen wird.

Die Stützplatte 30 weist eine mittige Durchbohrung 32 auf, durch die der Spann-und Riegelbolzen 20 geführt ist. Die Außenkontur der Stützplatte 30 ist so bemessen, daß sie zwar der Innenkontur des Gehäuses 10 im wesentlichen entspricht, jedoch noch eine gewisse Beweglichkeit der Stützplatte 30 gegenüber dem Gehäuse 10 zuläßt. Hierdurch ist es möglich, daß sich das Gehäuse 10 gegenüber der Stützplatte 30 um ein gewisses Maß bewegen kann.

Noch vorteilhafter ist es, zwischen der Stützplatte 30 und der Innenwand des Gehäuses 10 Gummiformkörper 40 vorzusehen. Diese werden im Klemmsitz zwischen der Stützplatte 30 und dem Gehäuse 10 gehalten und fangen Relativbewegungen des Gehäuses 10 gegenüber der Stützplatte 30 federnd ab.

Wenn ein Stützplatte 30 vorgesehen ist, wird die Spannmutter 50 gegen diese angezogen.

Die Spannmutter kann als Stoppmutter oder als Quetschmutter ausgeführt sein. Bevorzugt ist die Spannmutter 50 jedoch, wie in Figur 5 gezeigt, mit einem Sechskantabschnitt 54 und einem axial auf diesen folgenden Spannmutterabschnitt 52 ausgebildet. Eine so ausgebildete Spannmutter ist nicht wärmeempfindlich und läßt eine formschlüssige Sicherung zu. Sie läßt sich leicht manuell betätigen und ebenso leicht mit einem Schraubenschlüssel festziehen.

Um zu verhindern, daß sich die Spannmutter 50 unbeabsichtig löst, ist eine Sperre vorgesehen. Diese besteht im Ausführungsbeispiel aus einer Falle 60, die besonders in den Figuren 1 und 3a zu erkennen ist.

Die Falle ist mit einem aus zwei Abschnitten bestehenden Schlitz versehen, dessen in Figur 1 oberer Abschnitt parallele Seitenwände hat, während der untere Abschnitt rund ist. Die Falle 60 ist auf einem Vierkant 62 gehalten, der von einem zurücktretenden seitlichen Wandbereich 64 des Gehäuses 10 absteht, den Schlitz durchsetzt und an seiner freien Außenseite durch eine Scheibe 66 abgedeckt ist. Der Abstand der parallelen Seitenwände des Schlitzes entspricht der Größe des Vierkantes 62. Der Durchmesser des ausgerundeten Abschnittes des Schlitzes entspricht der Diagonale des Vierkantes 62. Dadurch läßt sich die Falle 60 in horizontaler Richtung nicht vom Vierkant 62 abnehmen, aber aus der Stellung gemäß Figur 1 entlang des Schlitzes anheben und dann in dem ausgerundeten Abschnitt verdrehen. In der gezeichneten Stellung verhindert die Falle 60 eine Bewegung der Spannmutter 50 und damit des Hammerkopfes 22. Eine Entriegelung des Hammerkopfes 22 ist nur möglich, wenn zunächst die Falle 60 mit der Spannmutter 50 außer Eingriff gebracht worden ist.

## Ansprüche

1. Niederspannbeschlag für lösbare Aufbauten, insbesondere für Fahrzeuge, mit

    1. einem Gehäuse

    1.1. mit einer Aufstandsfläche für den Aufbau,

    1.2. einem von der Aufstandsfläche aufwärts vorstehenden Führungselement, und

    1.3. einer mittigen vertikalen Durchbohrung,

    2. einem Spann-und Riegelbolzen, der

    2.1. in der Durchbohrung verdrehbar und vertikal verschieblich ist,

    2.2. einen Hammerkopf aufweist, und

    2.3. an seinem unteren Schaftabschnitt ein Gewinde trägt, und

    3. einer auf das Gewinde des Spann-und Riegelbolzens aufschraubbaren Spannmutter, dadurch gekennzeichnet, daß

    1.2.1. das Führungselement (14) aus vier von der Aufstandsfläche (12) nach oben ragenden Nocken (15) gebildet wird,

1.2.2. die Nocken (15) so angeordnet sind, daß sie zwischen sich zwei Paare jeweils fluchtender Zwischenräume (16a,b; 17a,b) bilden, die den Hammerkopf (22) des Spann-und Riegelbolzens (20) wenigstens teilweise aufnehmen können,

1.2.3. alle Nocken (15) an ihrer Oberseite mit auswärts abfallenden Schrägflächen (18) versehend sind, und

2.3 der Spann-und Riegelbolzen (20) T-förmig aus zwei im wesentlichen gleich dicken Stabsegmenten (28a,b) ausgebildet ist.

2. Beschlag nach Anspruch 1, dadurch gekennzeichnet, daß der Hammerkopf (22) in einer ersten Ruhestellung seitlich nicht über die Außenkontur des Führungselementes (14) vorstehend im ersten Zwischenraumpaar (16a,b), und in einer zweiten Verriegelungsstellung seitlich über die Außenkontur vorstehend im anderen Zwischenraumpaar (17a,b) aufgenommen ist.

3. Beschlag nach Anspruch 1 oder 2, dadurch gekennzeichnet, daß die Länge des Hammerkopfes (22) die kleinste Breite der Aufstandsfläche (12) nicht überschreitet und vorzugsweise dieser Breite entspricht.

4. Beschlag nach einem der Ansprüche 1 bis 3, dadurch gekennzeichnet, daß die Nocken (15) eine rechteckige Grundfläche aufweisen.

5. Beschlag nach einem der Ansprüche 1 bis 4, dadurch gekennzeichnet, daß die Zwischenraumpaare (16a,b; 17a,b) im rechten Winkel zueinander angeordnet sind.

6. Beschlag nach einem der Ansprüche 1 bis 5, dadurch gekennzeichnet, daß die Schrägflächen (18) in abgerundete Spitzen (19) der Nocken (15) auslaufen.

7. Beschlag nach einem der Ansprüche 1 bis 6, dadurch gekennzeichnet, daß der Spann-und Riegelbolzen (20) aus zwei gleichen Rundmaterialstücken (28a,b) gebildet und vorzugsweise der Hammerkopf (22) unterseitig leicht abgeflacht ist.

8. Beschlag nach einem der Ansprüche 1 bis 7, dadurch gekennzeichnet, daß der Spann-und Riegelbolzen (20) im unteren Schaftabschnitt (24) eine Querbohrung (25) zur Aufnahme eines Sicherungs- und Anzeigestiftes (27) aufweist.

9. Beschlag nach einem der Ansprüche 1 bis 8, dadurch gekennzeichnet, daß das Gehäuse (10) zur Aufnahme einer mittig durchbohrten Stützplatte (30) unterseitig offen ist.

10. Beschlag nach Anspruch 9, dadurch gekennzeichnet, daß die Außenkontur der Stützplatte (30) und die Innenkontur des Gehäuses (10) einander weitgehend entsprechen, und die Stützplatte (30) gegenüber dem Gehäuse (10) wenigstens geringfügig beweglich ist.

11. Beschlag nach Anspruch 9 oder 10, dadurch gekennzeichnet, daß im Gehäuse (10) zwischen diesem und der Stützplatte (30) im Klemmsitz gehaltene Federelemente, vorzugsweise Gummiformkörper (40) vorgesehen sind.

12. Beschlag nach einem der Ansprüche 9 bis 11, dadurch gekennzeichnet, daß die Spannmutter (50) gegen die Unterseite der Stützplatte (30) anzuziehen ist.

13. Beschlag nach einem der Ansprüche 1 bis 12, dadurch gekennzeichnet, daß eine Falle (60) zur Sicherung der Spannmutter (50) am Gehäuse (10) angeordnet ist.

Fig. 1

Fig. 2

Fig. 3

Fig. 3c

0 247 283

Fig. 3a

Fig. 3b

0 247 283

22

28a

20

28b

26

24

25

27

Fig. 4

50

52

Fig. 5

54